# EUROPÄISCHE PATENTSCHRIFT

(11) **EP 3 792 606 B1**
(45) Veröffentlichungstag und Bekanntmachung des Hinweises auf die Patenterteilung: **26.10.2022**
(21) Anmeldenummer: 19197414.6
(22) Anmeldetag: 13.09.2019
(51) Int. Cl.: G01J 3/02, G01J 3/453, G02F 1/35, B82Y 20/00, G02F 1/39, G01N 21/63

(54) **VERFAHREN UND VORRICHTUNG ZUR NICHTLINEAREN SPEKTROSKOPIE AN EINER PROBE**
METHOD AND DEVICE FOR NON-LINEAR SPECTROSCOPY OF A SAMPLE
PROCÉDÉ ET DISPOSITIF DE SPECTROSCOPIE NON LINÉAIRE SUR UN ÉCHANTILLON

(43) Veröffentlichungstag der Anmeldung: 17.03.2021
(73) Patentinhaber: Fraunhofer-Gesellschaft zur Förderung der angewandten Forschung e.V., 80686 München (DE)
(72) Erfinder: WOLF, Sebastian, 79110 Freiburg (DE); KÜHNEMANN, Frank, Dr., 79110 Freiburg (DE); LINDNER, Chiara, 79110 Freiburg (DE); KIESSLING, Jens, Dr., 79110 Freiburg (DE)
(74) Vertreter: WSL Patentanwälte Partnerschaft mbB

(56) Entgegenhaltungen:
- US-A1- 2005 206 904
- WOLF SEBASTIAN ET AL: "Dynamic Range of an Upconversion Detection Module for MWIR Laser Spectroscopy", 2019 CONFERENCE ON LASERS AND ELECTRO-OPTICS EUROPE & EUROPEAN QUANTUM ELECTRONICS CONFERENCE (CLEO/EUROPE-EQEC), IEEE, 23. Juni 2019 (2019-06-23), Seite 1, XP033633161, DOI: 10.1109/CLEOE-EQEC.2019.8873250 [gefunden am 2019-10-16]
- S. WOLF ET AL: "High-Speed MWIR Upconversion Spectroscopy", PROCEEDINGS IEEE, 1. Januar 2017 (2017-01-01), XP055674798, DOI: 10.5162/irs2017/i2.1 ISBN: 978-3-9816876-4-4

## Beschreibung

Die vorliegende Erfindung betrifft ein Verfahren und eine Vorrichtung zur Spektroskopie an einer Probe.

Um die optischen Eigenschaften von Proben, insbesondere im infraroten Spektralbereich, in Abhängigkeit von der Frequenz der elektromagnetischen Strahlung zu bestimmen, kommen häufig Fourier-Transformationsspektrometer (FTIR-Spektrometer) zum Einsatz. Bei solchen FTIR-Spektrometern wird das Spektrum einer Probeneigenschaft nicht durch schrittweises Ändern einer schmalbandigen, vorzugsweise monomodigen, Anregungswellenlänge erfasst, sondern ein spektral breitbandiger Anregungsstrahl wird in einem Interferometer auf zwei Strahlpfade aufgeteilt. Dabei wird der optische Weglängenunterschied der beiden Strahlpfade gegeneinander verändert. Die Amplitude der miteinander interferierenden Strahlung der beiden Strahlpfade wird in Abhängigkeit von der Weglängendifferenz zwischen den beiden Strahlpfaden erfasst und durch eine Transformation in ein Frequenzspektrum transformiert.

Das spektrale Auflösungsvermögen eines solchen FTIR-Spektrometers hängt maßgeblich von der maximal verfügbaren Weglängendifferenz zwischen den beiden Strahlpfaden ab, das abgedeckte Spektrum von der Bandbreite der verwendeten Strahlung. Bei der Detektion ergeben sich vor allem Nachteile, wenn Proben im mittel- oder ferninfraroten Bereich untersucht werden sollen. Bei der Detektion von Photonen mit geringen Energien ergibt sich aufgrund des thermischen Rauschens der Detektoren ein schlechtes Signal-zu-Rausch-Verhältnis. Kostengünstige Detektoren wie Bolometer oder Fotodetektoren zeigen lediglich im nahinfraroten Bereich ein ausreichendes Signal-zu-Rausch-Verhältnis. Für die Detektion von Strahlung im mittel- oder ferninfraroten Bereich müssen deutlich komplexere und teurere Detektionssysteme zum Einsatz kommen, die eine Kühlung der Detektoren vorsehen, um insbesondere das thermische Rauschen zu minimieren. Das so erzielbare Signal-zu-Rausch-Verhältnis ist dennoch nicht mit dem mit Detektoren im nahinfraroten oder sichtbaren Wellenlängenbereich erzielbaren Signal-zu-Rausch-Verhältnis vergleichbar.

Aus der US 2005/0206904 A1 ist ein Spektroskopieverfahren bekannt, bei welchem verschränkte Photonenpaare zum Einsatz kommen. Dabei trifft ein Photon des Photonenpaares in Wechselwirkung mit einer Probe, beide Photonen des Photonenpaares werden detektiert und die Probeneigenschaften aus dem Vergleich der beiden Photonen ausgewertet.

Darüber hinaus beschreibt Wolf in "High-Speed MWIR Upconversion Spectroscopy", AMA Conferences 2017 - Sensor 2017 and IRS 2017 und "Dynamic Range of an Upconversion Detection Module for MWIR Laser spectroscopy", The European Conference on Lasers and Electro-Optics, 2019 ein Verfahren zur Infrarotspektroskopie, bei welchem Signale aus dem mittleren Infrarotbereich in den Nahinfrarotbereich konvertiert werden, in welchem schnellere und sensiblere Detektoren verfügbar sind.

Der vorliegenden Erfindung liegt daher die Aufgabe zugrunde, ein Verfahren und eine Vorrichtung zur Spektroskopie an einer Probe bereitzustellen, die es ermöglichen, die Eigenschaften einer Probe auf vereinfachte Weise auch in solchen Frequenzbereichen zu erfassen, in denen keine kostengünstigen und ausreichend sensitiven Detektoren zur Verfügung stehen.

Darüber hinaus liegt der Erfindung die Aufgabe zugrunde, ein Verfahren und eine Vorrichtung zur Spektroskopie an einer Probe bereitzustellen, die es ermöglichen, die Eigenschaften der Probe über einen großen Frequenzbereich zu erfassen.

Zumindest eine der zuvor genannten Aufgaben wird erfindungsgemäß durch ein Verfahren zur nichtlinearen optischen Spektroskopie an einer Probe gelöst, welches die folgenden Schritte aufweist:
a) Erzeugen von elektromagnetischer Pumpstrahlung,
b) Erzeugen einer ersten Signalstrahlung und einer ersten Idlerstrahlung aus einem Teil der Pumpstrahlung mittels einer ersten parametrischen Fluoreszenz in einem nichtlinearen optischen Medium, so dass
   die erste Signalstrahlung eine erste Signalfrequenzbandbreite und eine erste Signalmittenfrequenz aufweist,
   die erste Idlerstrahlung eine erste Idlerfrequenzbandbreite und eine erste Idlermittenfrequenz aufweist und
   die erste Signalmittenfrequenz von der ersten Idlermittenfrequenz verschieden ist,
c) Erzeugen einer zweiten Signalstrahlung und einer zweiten Idlerstrahlung aus einem Teil der Pumpstrahlung mittels einer zweiten parametrischen Fluoreszenz in einem nichtlinearen optischen Medium, wobei die erste Idlerstrahlung bei dem Erzeugen der zweiten Idlerstrahlung mit dem nichtlinearen optischen Medium wechselwirkt und der zweiten Idlerstrahlung und der zweiten Signalstrahlung ihre Phase aufprägt, so dass die zweite Signalstrahlung eine zweite Signalfrequenzbandbreite, die gleich der ersten Signalfrequenzbandbreite ist, und eine zweite Signalmittenfrequenz, die gleich der ersten Signalmittenfrequenz ist, aufweist,
   die zweite Idlerstrahlung eine zweite Idlerfrequenzbandbreite, die gleich der ersten Idlerfrequenzbandbreite ist und eine zweite Idlermittenfrequenz, die gleich der ersten Idlermittenfrequenz ist, aufweist, und
   die erste Idlerstrahlung und die zweite Idlerstrahlung kohärent zueinander sind,
d) Räumliches Überlagern der ersten Signalstrahlung und der zweiten Signalstrahlung, wobei die erste Signalstrahlung zwischen Schritt b) und c) eine optische Signalweglänge zurücklegt und die erste Idlerstrahlung zwischen Schritt b) und c) eine optische Idlerweglänge zurücklegt,
e) Ändern einer Weglängendifferenz zwischen der optischen Signalweglänge und der optischen Idlerweglänge,
f) Erfassen eines Weglängeninterferenzmusters einer Intensität ausschließlich der räumlich überlagerten ersten und zweiten Signalstrahlung nach dem räumlichen Überlagern der ersten Idlerstrahlung und der zweiten Idlerstrahlung in dem nichtlinearen optischen Medium der zweiten parametrischen Fluoreszenz in Abhängigkeit von der Weglängendifferenz,
g) Erzeugen eines Frequenzspektrums der ersten Idlerstrahlung durch Transformieren des von der Weglängendifferenz abhängigen Weglängeninterferenzmusters in das Frequenzspektrum,
wobei die Probe das nichtlineare optische Medium der zweiten parametrischen Fluoreszenz ist oder wobei die Probe zwischen den Schritten b) und c) von der ersten Idlerstrahlung beleuchtet wird.

Bei dem erfindungsgemäßen Verfahren wird der quantenmechanische Effekt ausgenutzt, dass durch parametrische Fluoreszenz in einem nichtlinearen, optischen Medium miteinander verschränkte Photonenpaare erzeugt werden. Die Wellenlängen bzw. die Frequenzen der dabei entstehenden Photonen der Idlerstrahlung und der Signalstrahlung sind erfindungsgemäß voneinander verschieden. Aufgrund der Energieerhaltung ist die Summe der Frequenzen der Photonen der Signalstrahlung und Idlerstrahlung gleich der Frequenz des ursprünglichen, erzeugenden Photons der Pumpstrahlung.

Die auf diese Weise generierte Signalstrahlung hat eine Signalfrequenzbandbreite sowie eine Signalmittenfrequenz ebenso wie die generierte Idlerstrahlung eine Idlerfrequenzbandbreite und eine Idlermittenfrequenz hat.

Je nach Wahl des nichtlinearen, optischen Mediums und der Mittenfrequenz der Pumpstrahlung können die Mittenfrequenzen der Idlerstrahlung und der Signalstrahlung so gewählt werden, dass die Idlermittenfrequenz im demjenigen Frequenzbereich liegt, in welchem eine Eigenschaft der Probe untersucht werden soll und die Signalmittenfrequenz in einem solchen Frequenzbereich, in dem kostengünstige und/oder ausreichend sensitive Detektoren zur Verfügung stehen.

Nachdem die Idler- und Signalstrahlung entsprechend der gewünschten Anwendung in dem nichtlinearen optischen Medium durch parametrische Fluoreszenz erzeugt wurden, werden Signalstrahlung und Idlerstrahlung in einer Ausführungsform der Erfindung räumlich voneinander getrennt.

In einer weiteren Ausführungsform der Erfindung wird zudem die Pumpstrahlung von der Idlerstrahlung getrennt. Wenn hingegen bekannt ist, dass die Probe weder mit der Pump- noch mit der Signalstrahlung eine Wechselwirkung eingeht, kann auf eine Trennung der Pump- und Signalstrahlung von der Idlerstrahlung verzichtet werden.

In einer Ausführungsform tritt anschließend zumindest die Idlerstrahlung in Wechselwirkung mit einer zu untersuchenden Probe.

In einer Ausführungsform wird die Probe jedoch von der Quelle der Signal- und Idlerstrahlung oder Teilen davon, nämlich dem Laser zum Erzeugen der Pumpstrahlung und/oder dem nichtlinear optischen Medium, gebildet. Die Anordnung dient dann der spektralen Charakterisierung der Quelle für die ersten Signal- und Idlerstrahlung und es wird keine zusätzliche Probe in den Strahlengang der Idlerstrahlung eingefügt.

Um die erzeugte erste Idler- und erste Signalstrahlung in dem Interferometer des Spektrometers für die Messung verwenden zu können, werden eine zweite Idlerstrahlung und eine zweite Signalstrahlung benötigt, wobei dann zumindest die erste und die zweite Signalstrahlung miteinander zur Interferenz gebracht werden. Um eine Interferenz erfassen zu können, müssen die erste Idlerstrahlung und die zweite Idlerstrahlung sowie die erste Signalstrahlung und die zweite Signalstrahlung zueinander kohärent sein. In einer quantenoptischen Betrachtung bedeutet dies, dass die ersten und zweiten Signalphotonen sowie die ersten und zweiten Idlerphotonen voneinander ununterscheidbar sind. Diese Forderung wird erfüllt, indem bei einer zweiten parametrischen Fluoreszenz zumindest die erste Idlerstrahlung nach der Wechselwirkung mit der Probe bei der Erzeugung der zweiten Idlerstrahlung mit dem nichtlinear optischen Medium in Wechselwirkung tritt und der zweiten Idlerstrahlung ihre Phase aufprägt. Dieser Vorgang wird auch als induzierte Kohärenz bezeichnet. Die bei der zweiten parametrischen Fluoreszenz erzeugte zweite Signalstrahlung ist damit auch phasenstarr zu der ersten Signalstrahlung und trägt die Informationen, die der ersten Idlerstrahlung bei der Wechselwirkung mit der Probe aufgeprägt wurden.

Im Sinne der vorliegenden Erfindung ist die optischen Idlerweglänge die Strecke, welche die erste Idlerstrahlung zwischen ihrer Erzeugung und dem Erzeugen der zweiten Signal- und Idlerstrahlung zurücklegt. Die optische Signalweglänge ist korrespondierend die Strecke, welche die erste Signalstrahlung zwischen ihrer Erzeugung und dem räumlichen Überlagern mit der zweiten Signalstrahlung zurücklegt. Die Änderung der Weglängendifferenz zwischen optischer Idlerweglänge und optischer Signalweglänge erfolgt entweder durch die Änderung der optischen Idlerweglänge oder durch die Änderung der optischen Signalweglänge.

Durch die räumliche Überlagerung der ersten und zweiten Signalstrahlung interferieren diese miteinander. Ändert man die Weglängendifferenz zwischen der optischen Idlerweglänge und der optischen Signalweglänge, so wie man die Weglängendifferenz der beiden Strahlpfade in einem klassischen FTIR-Spektrometer variiert, so ändert sich die Amplitude der Überlagerung zwischen erster und zweiter Signalstrahlung aufgrund der Interferenz in Abhängigkeit von der Weglängendifferenz.

Die räumliche Überlagerung der ersten und zweiten Signalstrahlung wird mit einer Detektionseinrichtung erfasst. Dabei umfasst die Detektionseinrichtung in einer Ausführungsform einen kostengünstigen und sensitiven Punktdetektor wie beispielsweise einen Fotodetektor, insbesondere eine Fotodiode.

Nachdem das von der Weglängendifferenz abhängige Weglängeninterferenzmuster erfasst wurde, wird dieses durch eine anschließende Transformation, insbesondere eine Fourier-Transformation, in den Frequenzraum transformiert und ein Frequenzspektrum ausgegeben.

Ein Vorteil des erfindungsgemäßen Verfahrens besteht darin, dass auch ein Frequenzspektrum einer Probe in einem Frequenzbereich erfasst wird, in welchem keine ausreichend sensitiven und/oder kostengünstigen Detektionseinrichtungen mit entsprechenden Detektoren zur Verfügung stehen.

Im Vergleich zu anderen nichtlinear optischen Spektroskopieverfahren bietet das erfindungsgemäße Verfahren und die erfindungsgemäße Vorrichtung zudem den Vorteil, dass die Probeneigenschaften über einen großen Frequenzbereich ohne Notwendigkeit einer Abstimmung der Pumpstrahlung und damit der Signal- und Idlerstrahlung erfasst werden.

Daher beträgt in einer Ausführungsform der Erfindung die Idlerfrequenzbandbreite mindestens 2 THz, vorzugsweise mindestens 3 THz und besonders bevorzugt mindestens 10 THz. Die Signalfrequenzbandbreite beträgt ebenfalls mindestens 2 THz, vorzugsweise mindestens 3 THz und besonders bevorzugt mindestens 10 THz.

Soweit bekannte Verfahren eine Änderung der Weglängendifferenz zwischen Idlerweglänge und Signalweglänge offenbaren, so ist diese minimal, mit dem Ziel, den Interferenzkontrast zu bestimmen.

In einer Ausführungsform weist die erste und zweite Idlerstrahlung eine Idlermittenfrequenz im Infrarotbereich, bevorzugt im mittleren Infrarotbereich von 60 THz bis 100 THz, auf und die erste und zweite Signalstrahlung eine Signalmittenfrequenz im sichtbaren oder nahinfraroten Bereich, bevorzugt in einem Bereich von 100 THz bis 380 THz.

Es versteht sich, dass das erfindungsgemäße Verfahren zur nichtlinearen Spektroskopie an einer Probe auch in anderen Frequenzbereichen der Idlerstrahlung als dem Infrarotbereich verwendet werden kann.

In einer Ausführungsform der Erfindung wird die Weglängendifferenz zwischen optischer Idlerweglänge und optischer Signalweglänge durch eine Änderung der optischen Idlerweglänge geändert und zwar um ein Vielfaches einer Wellenlänge der ersten Idlermittenfrequenz, bevorzugt um ein 100-faches der Wellenlänge, besonders bevorzugt um ein 1000-faches der Wellenlänge der ersten Idlermittenfrequenz.

In einer Ausführungsform der Erfindung wird die Weglängendifferenz zwischen optischer Idlerweglänge und optischer Signalweglänge durch eine Änderung der optischen Signalweglänge geändert und zwar um ein Vielfaches einer Wellenlänge der ersten Idlermittenfrequenz, bevorzugt um ein 100-faches der Wellenlänge, besonders bevorzugt um ein 1000-faches der Wellenlänge der ersten Idlermittenfrequenz.

In einer Ausführungsform der Erfindung werden die erste Signalstrahlung und die erste Idlerstrahlung in Schritt b) kollinear erzeugt, d.h. ihre Strahlachse verläuft auf dem gleichen geometrischen Pfad. Im Falle einer räumlichen Trennung der ersten Idler- und ersten Signalstrahlung durchlaufen diese bis zu der räumlichen Trennung der Signal- und Idlerstrahlung den gleichen räumlichen und optischen Weg. Dies bietet den Vorteil einer einfacheren Justierung des Spektrometers. Zudem können die Komponenten des Spektrometers reduziert werden, da Komponenten wie beispielsweise Spiegel sowohl zum Führen der Idler- als auch der Signalstrahlung verwendet werden.

Ferner wird zumindest eine der eingangs genannten Aufgaben durch eine Vorrichtung zur nichtlinearen optischen Spektroskopie an einer Probe gelöst, aufweisend einen Laser, wobei der Laser derart eingerichtet ist, dass der Laser in einem Betrieb der Vorrichtung elektromagnetische Pumpstrahlung erzeugt, zumindest ein nichtlineares optisches Medium, wobei das zumindest eine nichtlineare optische Medium derart eingerichtet und angeordnet ist, dass aus einem Teil der Pumpstrahlung mittels einer ersten parametrischen Fluoreszenz eine erste Signalstrahlung und eine erste Idlerstrahlung erzeugbar ist, so dass die erste Signalstrahlung eine erste Signalfrequenzbandbreite und eine erste Signalmittenfrequenz aufweist, die erste Idlerstrahlung eine erste Idlerfrequenzbandbreite und eine erste Idlermittenfrequenz aufweist und die erste Signalmittenfrequenz von der ersten Idlermittenfrequenz verschieden ist, wobei das zumindest eine nichtlineare optische Medium derart eingerichtet und angeordnet ist, dass aus einem Teil der Pumpstrahlung mittels einer zweiten parametrischen Fluoreszenz eine zweite Signalstrahlung und eine zweite Idlerstrahlung erzeugbar ist, wobei die erste Idlerstrahlung bei der Erzeugung der zweiten Idlerstrahlung mit dem zumindest einen nichtlinearen optischen Medium wechselwirkt und der zweiten Idlerstrahlung und der zweiten Signalstrahlung ihre Phase aufprägt, so dass die zweite Signalstrahlung eine zweite Signalfrequenzbandbreite, die gleich der ersten Signalfrequenzbandbreite ist, und eine zweite Signalmittenfrequenz, die gleich der ersten Signalmittenfrequenz ist, aufweist, die zweite Idlerstrahlung eine zweite Idlerfrequenzbandbreite, die gleich der ersten Idlerfrequenzbandbreite ist und eine zweite Idlermittenfrequenz, die gleich der ersten Idlermittenfrequenz ist, aufweist, und die erste Idlerstrahlung und die zweite Idlerstrahlung kohärent zueinander sind, wobei die erste Signalstrahlung auf einem Signalpfad und die erste Idlerstrahlung auf einem Idlerpfad führbar sind, wobei eine optische Signalweglänge die Strecke ist, die die erste Signalstrahlung auf dem Signalpfad zurücklegt, wobei eine optische Idlerweglänge die Strecke ist, die die erste Idlerstrahlung auf dem Idlerpfad zurücklegt, eine Weglängenänderungseinrichtung, wobei mit der Weglängenänderungseinrichtung entweder die optische Idlerweglänge oder die optische Signalweglänge veränderbar ist, so dass eine Weglängendifferenz zwischen der Signalweglänge und der Idlerweglänge veränderbar ist, eine Detektionseinrichtung, wobei mit der Detektionseinrichtung ein Weglängeninterferenzmuster einer Intensität ausschließlich der räumlich überlagerten ersten und zweiten Signalstrahlung in Abhängigkeit von der Weglängendifferenz erfassbar ist, und eine Auswerteeinrichtung, wobei die Auswerteeinrichtung derart eingerichtet ist, dass in einem Betrieb der Vorrichtung ein Frequenzspektrum der ersten Idlerstrahlung durch Transformation des von der Weglängendifferenz abhängigen Weglängeninterferenzmusters in das Frequenzspektrum erzeugt wird, wobei die Probe das zumindest eine nichtlineare optische Medium der zweiten parametrischen Fluoreszenz ist oder wobei die Probe in dem Idlerpfad angeordnet ist..

In einer Ausführungsform der Erfindung weist die Vorrichtung einen ersten Strahlteiler auf, der die erste Signalstrahlung räumlich von der ersten Idlerstrahlung trennt. In einer weiteren Ausführungsform ist der erste Strahlteiler ein dichroitischer Spiegel, der entweder die Idlerstrahlung transmittieren lässt und die Signalstrahlung reflektiert oder umgekehrt.

In einer Ausführungsform dient das nichtlinear optische Medium als Strahlteiler, wobei die Erzeugung und Abstrahlung der Signalstrahlung und der Idlerstrahlung in dem Medium so erfolgt, dass sich Signalstrahlung und Idlerstrahlung nicht räumlich überdecken.

In einer Ausführungsform der Erfindung umfasst die Weglängenänderungseinrichtung, welche die Weglängendifferenz zwischen optischer Signalweglänge und optischer Idlerweglänge ändert, mindestens einen Spiegel und eine Verschiebeeinrichtung. Dabei ist der mindestens eine Spiegel auf der Verschiebeeinrichtung montiert und die erste Signal- oder Idlerstrahlung wird an dem mindestens einen Spiegel reflektiert. Der mindestens eine Spiegel ist durch die Verschiebeeinrichtung in seiner Position verschiebbar, sodass die optische Idlerweglänge oder die optische Signalweglänge geändert wird.

Im Vergleich zu einer Änderung der optischen Idler- oder Signalweglänge beispielsweise durch einen Faserstrecker bietet dies den Vorteil, dass zum einen größere Änderungen realisiert werden, zum anderen ist eine Verschiebeeinrichtung, die beispielsweise aus einer mit einer Spindel verschiebbaren Plattform und einem Spiegel besteht kostengünstiger und stabiler gegenüber Veränderungen in der Umgebung wie beispielsweise Temperaturschwankungen.

In einer Ausführungsform der Erfindung besteht die Weglängenänderungseinrichtung hingegen aus einem nichtlinear optischen Kristall, mit welchem durch Anlegen einer Spannung die Laufzeit der Idler- und/oder Signalstrahlung verzögert werden kann.

In einer weiteren Ausführungsform weist die Erfindung eine zweiten Strahlteiler, insbesondere einen dichroitischen Spiegel auf, wobei der zweite Strahlteiler die Pumpstrahlung zu dem nichtlinearen optischen Medium leitet und die an dem Spiegel reflektierte Signalstrahlung zu dem Detektor. Dadurch wird die Anzahl der für das Spektrometer notwendigen Komponenten nochmals reduziert und die Justierung zusätzlich erleichtert.

Das nichtlineare optische Medium ist in einer der Ausführungsformen der Erfindung genau ein nichtlineares optisches Medium, d.h. die erste und die zweite parametrische Fluoreszenz finden in dem gleichen nichtlinearen optischen Medium statt. Auch hier wird die Anzahl der Komponenten nochmals reduziert.

In einer anderen Ausführungsform umfasst das mindestens eine nichtlineare optische Medium ein erstes und ein zweites nichtlineares optisches Medium, wobei in dem ersten nichtlinearen optischen Medium die erste Signal- und Idlerstrahlung erzeugt werden und in dem zweiten nichtlinearen optischen Medium die zweite Signal- und Idlerstrahlung erzeugt werden.

In einer weiteren Ausführungsform der Erfindung ist das nichtlineare optische Medium ein nichtlinearer optischer Kristall, wobei der Kristall beispielswiese aus einem quasi-phasenangepassten Material besteht, wie Lithiumniobat, Lithiumtantalat, Galliumphosphid, Galliumarsenid oder aus einem winkelphasenangepassten Material, wie Betabariumborat.

Grundsätzlich kann eine Vielzahl von Interferometern, insbesondere von wellenfrontaufspaltenden Interferometern zur Realisierung der erfindungsgemäßen Vorrichtung verwendet werden. Gemeinsam ist diesen Aufbauten in einer Gruppe von Ausführungsformen, dass die erste Signalstrahlung und die erste Idlerstrahlung zumindest abschnittsweise räumlich voneinander getrennte Strahlwege oder Strahlpfade haben, so dass die Probe in den Strahlpfad der Idlerstrahlung eingefügt werden kann, ohne dass sie im Strahlpfad der Signalstrahlung ist.

Ist die Probe derart beschaffen, dass sie im Strahlpfad der Signalstrahlung keine Wechselwirkung mit dieser zeigt, so kann die Probe an einer beliebigen Position im Interferometer in der Signalstrahlung und der Idlerstrahlung gleichzeitig angeordnet werden. Eine räumliche Trennung der ersten Signal- und ersten Idlerstrahlung entfällt dann in einer Ausführungsform.

Nachfolgend werden zumindest die erste Signalstrahlung und die zweite Signalstrahlung miteinander zur räumlichen Überlagerung gebracht. Insbesondere kann die erfindungsgemäße Vorrichtung mit einer Michelson-Anordnung oder einer Mach-Zehnder-Anordnung realisiert werden.

Weitere Vorteile, Merkmale und Anwendungsmöglichkeiten der vorliegenden Erfindung werden anhand der folgenden Beschreibung einer Ausführungsform und der dazugehörigen Figuren deutlich. In den Figuren sind gleiche Elemente mit gleichen Bezugszeichen bezeichnet.
- Figur 1: ist eine schematische Darstellung eines Spektrometers gemäß einer ersten Ausführungsform der vorliegenden Erfindung.
- Figur 2: ist eine schematische Darstellung eines Spektrometers gemäß einer weiteren Ausführungsform der vorliegenden Erfindung.

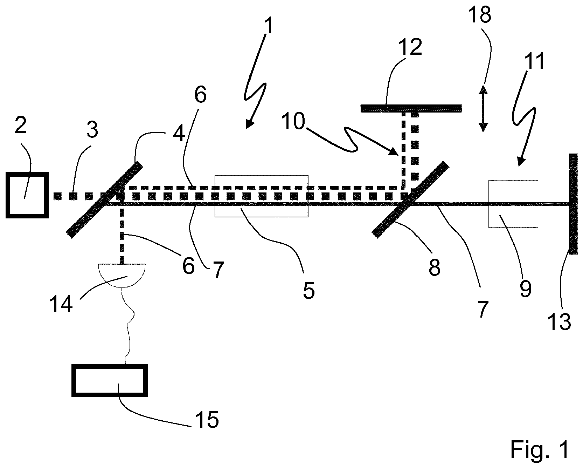

Die Vorrichtung zur optischen Spektroskopie einer Probe, d.h. das Spektrometer 1, der Figur 1 umfasst einen Laser 2 zur Erzeugung elektromagnetischer Pumpstrahlung 3 mit einer Wellenlänge von 780 nm. Die Pumpstrahlung 3 tritt durch einen für die Pumpstrahlung 3 durchlässigen Spiegel 4 in einen quasi-phasenangepassten nichtlinear optischen Lithiumniobat-Kristall 5.

In dem nichtlinearen optischen Kristall 5 wird durch parametrische Fluoreszenz eine erste Signalstrahlung 6 und eine erste Idlerstrahlung 7 generiert. Der dabei ablaufende nichtlinear optische Prozess kann auch im Photonenbild beschrieben werden. Aus jeweils einem Photon der Pumpstrahlung 3 wird ein quantenmechanisch verschränktes Photonenpaar generiert, wobei jeweils eines der Photonen des Paares die Idlerwellenlänge hat und das andere Photon des Paares die Signalwellenlänge hat.

Die Signalstrahlung 6 weist eine Signalmittenwellenlänge von 1000 nm auf, wohingegen die Idlerstrahlung 7 eine Idlermittenwellenlänge von 3,54 µm hat. Die Signalstrahlung 6 hat damit eine Signalmittenfrequenz von 300 THz. Die Signalfrequenzbandbreite beträgt 24 THz. Die Idlerstrahlung 6 hat somit eine Idlermittenfrequenz von 84 THz. Die Idlerfrequenzbandbreite beträgt 24 THz.

Damit liegt die Idlermittenfrequenz im mittelinfraroten Spektralbereich und ist geeignet für die Infrarot-Spektroskopie an einer Probe 9. Demgegenüber liegt die Signalmittenfrequenz der Signalstrahlung 6 in einem Frequenzbereich, für den rauscharme Detektoren 14 verfügbar sind.

In Strahlrichtung der vom Laser 2 emittierten Pumpstrahlung 3 hinter dem nichtlinear optischen Kristall 5 ist ein zweiter teildurchlässiger Spiegel 8 angeordnet, welcher die Idlerstrahlung 7 transmittieren lässt und die Signalstrahlung 6 sowie die Pumpstrahlung 3 reflektiert.

Damit dient der zweite teildurchlässige Spiegel 8 als Strahlteiler der räumlichen Trennung der Signalstrahlung 6 einerseits und der Idlerstrahlung 7 andererseits. Die Strahlpfade der Signalstrahlung 6 und der Idlerstrahlung 7 in Strahlrichtung vom Laser her betrachtet hinter dem teildurchlässigen Spiegel 8 werden als Signalpfad 10 bzw. Idlerpfad 11 bezeichnet. Dabei hat der Signalpfad eine Signalweglänge und der Idlerpfad 11 hat eine Idlerweglänge. Sowohl im Signalpfad 10 als auch in dem Idlerpfad 11 befindet sich jeweils ein Spiegel 12, 13, welche die Signalstrahlung 6 bzw. die Idlerstrahlung 7 jeweils in sich selbst zurück reflektieren. Der Spiegel 12 im Signalpfad 10 reflektiert darüber hinaus die Pumpstrahlung 3 in sich selbst zurück.

Im Idlerpfad 11 ist ferner die mit der mittelinfraroten Strahlung 7 zu spektroskopierende Probe 9 angeordnet.

Aufgrund der Anordnung sowie der Transmission und Reflexion der Spiegel 8, 12 und 13 gelangen die in den Spiegeln 12 und 13 reflektierte Signalstrahlung, Idlerstrahlung und Pumpstrahlung mit entgegengesetzter Strahlrichtung erneut in den nichtlinear optischen Kristall 5. Bei diesem erneuten Durchgang der Pumpstrahlung 3 durch den Kristall 5 wird wieder durch parametrische Fluoreszenz Signalstrahlung 6 und Idlerstrahlung 7 generiert. Diese bei dem zweiten Durchgang der Pumpstrahlung 3 durch den nichtlinear optischen Kristall 5 generierte Signalstrahlung 6 und Idlerstrahlung 7 wird im Sinne der vorliegenden Anmeldung als zweite Signalstrahlung und zweite Idlerstrahlung bezeichnet und ist von der ersten Signalstrahlung und der ersten Idlerstrahlung nicht zu unterscheiden, d.h. im Bilde der klassischen Optik kohärent. Diese notwendige Ununterscheidbarkeit wird durch die Wechselwirkung des nichtlinear optischen Kristalls mit der zurück in den Kristall reflektierten ersten Signalstrahlung 6 und ersten Idlerstrahlung 7 bewirkt.

Der erste teildurchlässige Spiegel 4 ist selektiv reflektierend für die Signalstrahlung 8, sodass diese von dem Kristall kommend von der Idlerstrahlung 7 und der Pumpstrahlung 3 räumlich getrennt auf einen Detektor 14 geleitet wird.

Aufgrund der induzierten Kohärenz zwischen der ersten und zweiten Signalstrahlung 6 und der Idlerstrahlung 7 lässt sich die gesamte spektroskopische Information, welche beim Durchgang der ersten Idlerstrahlung 7 durch die Probe 9 dieser aufgeprägt wird, durch Messung ausschließlich der Überlagerung der ersten und zweiten Signalstrahlung 8 erfassen. Um die spektrale Information zu erhalten wird die Weglängendifferenz zwischen der Signalweglänge und der Idlerweglänge variiert. Zu diesem Zweck ist der Spiegel 12 im Signalpfad 10 mit Hilfe eines Linearversteller 18 linear über einen Weg, der ein 500-faches der Wellenlänge der ersten und zweiten Idlermittenfrequenz beträgt, verschiebbar.

Mit dem Detektor 14 wird während der spektroskopischen Vermessung der Probe 9 die Intensität der Überlagerung der ersten und zweiten Signalstrahlung 8 in Abhängigkeit von dem Verfahrweg des Spiegels 12, d.h. einer Weglängendifferenz zwischen Signalpfad und Idlerpfad, erfasst.

Das so erfasste Interferenzmuster wird im Sinne der vorliegenden Anmeldung auch als Weglängeninterferenzmuster bezeichnet, da es die Intensität der Signalstrahlung in Abhängigkeit von der Weglängendifferenz zwischen dem Signalpfad 10 und dem Idlerpfad 11 aufträgt.

In einer mit dem Detektor 14 verbundenen Auswerteeinrichtung 15 wird dieses Weglängeninterferenzmuster nicht nur aufgezeichnet, sondern aus dem Weglängeninterferenzmuster wird durch Fourier-Transformation ein Frequenzspektrum erzeugt. Dieses Frequenzspektrum zeigt dann beispielsweise die Absorptionsbanden der Probe 9 im Idlerpfad 11.

Der Aufbau aus Figur 1 ist ein quantenoptisches Michelson-Interferometer.

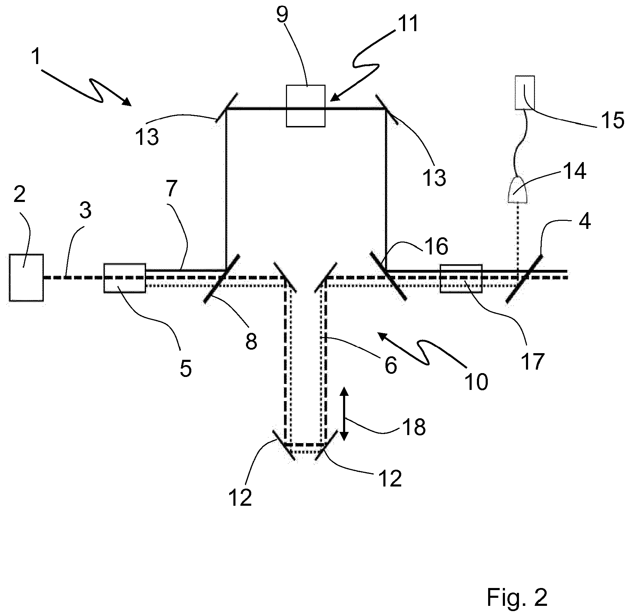

Demgegenüber zeigt Figur 2 einen alternativen Aufbau eines solchen Interferometers, welches man auch als quantenoptisches Mach-Zehnder-Interferometer bezeichnet. Da die Signalstrahlung 6 und die Idlerstrahlung 7 das Interferometer an einem Ausgang, der von einem weiteren teildurchlässigen Spiegel 16 gebildet wird, verlassen, welcher nicht gleich dem Eingangsspiegel 8 des Interferometers ist, wird ein zweiter nichtlinear optischer Kristall 17 benötigt, um aus der Pumpstrahlung 3 und unter Wechselwirkung mit der ersten Signalstrahlung 6 und ersten Idlerstrahlung 7 die zweite Signalstrahlung 6 und die zweite Idlerstrahlung 7 zu erzeugen. Durch Änderung der Position der Spiegel 12 im Signalpfad 10 des Interferometers mit Hilfe eines Linearverstellers 18 kann mit dem Detektor 14 wieder ein Weglängeninterferenzmuster, d.h. ein Interferenzmuster in Abhängigkeit von der Weglängendifferenz zwischen dem Signalpfad 10 und dem Idlerpfad 11, mit dem Detektor 14 erfasst werden. Die Auswertung dieses Weglängeninterferenzmusters erfolgt wie zuvor beschrieben in der Auswerteeinrichtung 15.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt. Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht. Die Erfindung wird durch die beigefügten Ansprüche definiert.

### Bezugszeichen

- 1: FTIR-Spektrometer
- 2: Laser
- 3: Pumpstrahlung
- 4: teildurchlässiger Spiegel
- 5: erster nichtlinear optischer Kristall
- 6: Signalstrahlung
- 7: Idlerstrahlung
- 8: teildurchlässiger Spiegel/Strahlteiler
- 9: Probe
- 10: Signalpfad
- 11: Idlerpfad
- 12, 13: Spiegel
- 14: Detektor
- 15: Auswerteeinrichtung
- 16: teildurchlässiger Spiegel
- 17: zweiter nichtlinear optischer Kristall
- 18: Linearversteller

## Patentansprüche

1. Verfahren zur nichtlinearen optischen Spektroskopie (1) an einer Probe (9) mit den Schritten
a) Erzeugen von elektromagnetischer Pumpstrahlung (3),
b) Erzeugen einer ersten Signalstrahlung (6) und einer ersten Idlerstrahlung (7) aus einem Teil der Pumpstrahlung (3) mittels einer ersten parametrischen Fluoreszenz in einem nichtlinearen optischen Medium (5, 17), so dass
die erste Signalstrahlung (6) eine erste Signalfrequenzbandbreite und eine erste Signalmittenfrequenz aufweist,
die erste Idlerstrahlung (7) eine erste Idlerfrequenzbandbreite und eine erste Idlermittenfrequenz aufweist und
die erste Signalmittenfrequenz von der ersten Idlermittenfrequenz verschieden ist,
c) Erzeugen einer zweiten Signalstrahlung (6) und einer zweiten Idlerstrahlung (7) aus einem Teil der Pumpstrahlung (3) mittels einer zweiten parametrischen Fluoreszenz in einem nichtlinearen optischen Medium (5, 17), wobei die erste Idlerstrahlung (7) bei dem Erzeugen der zweiten Idlerstrahlung (7) mit dem nichtlinearen optischen Medium (5, 17) wechselwirkt und der zweiten Idlerstrahlung (7) und der zweiten Signalstrahlung (6) ihre Phase aufprägt, so dass
die zweite Signalstrahlung (6) eine zweite Signalfrequenzbandbreite, die gleich der ersten Signalfrequenzbandbreite ist, und eine zweite Signalmittenfrequenz, die gleich der ersten Signalmittenfrequenz ist, aufweist,
die zweite Idlerstrahlung (7) eine zweite Idlerfrequenzbandbreite, die gleich der ersten Idlerfrequenzbandbreite ist und eine zweite Idlermittenfrequenz, die gleich der ersten Idlermittenfrequenz ist, aufweist, und
die erste Idlerstrahlung (7) und die zweite Idlerstrahlung (7) kohärent zueinander sind,
d) Räumliches Überlagern der ersten Signalstrahlung (6) und der zweiten Signalstrahlung (6), wobei die erste Signalstrahlung (6) zwischen Schritt b) und c) eine optische Signalweglänge zurücklegt und die erste Idlerstrahlung zwischen Schritt b) und c) eine optische Idlerweglänge zurücklegt,
e) Ändern einer Weglängendifferenz zwischen der optischen Signalweglänge und der optischen Idlerweglänge,
f) Erfassen eines Weglängeninterferenzmusters einer Intensität ausschließlich der räumlich überlagerten ersten und zweiten Signalstrahlung (6) nach dem räumlichen Überlagern der ersten Idlerstrahlung (7) und der zweiten Idlerstrahlung (7) in dem nichtlinearen optischen Medium (5, 17) der zweiten parametrischen Fluoreszenz in Abhängigkeit von der Weglängendifferenz,
g) Erzeugen eines Frequenzspektrums der ersten Idlerstrahlung (7) durch Transformieren des von der Weglängendifferenz abhängigen Weglängeninterferenzmusters in das Frequenzspektrum,
wobei die Probe das nichtlineare optische Medium (5, 17) der zweiten parametrischen Fluoreszenz ist oder wobei die Probe (9) zwischen den Schritten b) und c) von der ersten Idlerstrahlung (7) beleuchtet wird.

2. Verfahren nach Anspruch 1, **dadurch gekennzeichnet, dass** das Verfahren zwischen den Schritten b) und c) weiterhin den Schritt räumliches Trennen der Signalstrahlung (6) von der Idlerstrahlung (7) aufweist.

3. Verfahren nach einem der vorhergehenden Ansprüche, **dadurch gekennzeichnet, dass** die erste und zweite Idlerstrahlung (7) eine Wellenlänge im Infrarotbereich, insbesondere im mittelinfraroten Bereich, haben und die erste und zweite Signalstrahlung eine Wellenlänge im sichtbaren oder nahinfraroten Bereich haben.

4. Verfahren nach einem der vorhergehenden Ansprüche, **dadurch gekennzeichnet, dass** die Weglängendifferenz um ein Vielfaches einer Wellenlänge der ersten Idlermittenfrequenz, bevorzugt um ein 100-faches, besonders bevorzugt um ein 1000-faches der Wellenlänge der ersten Idlermittenfrequenz geändert wird.

5. Verfahren nach einem der vorhergehenden Ansprüche, **dadurch gekennzeichnet, dass** die erste Signalstrahlung (6) und die erste Idlerstrahlung (7) in Schritt b) kollinear erzeugt werden.

6. Vorrichtung (1) zur nichtlinearen optischen Spektroskopie an einer Probe (9) aufweisend
einen Laser (2), wobei der Laser (2) derart eingerichtet ist, dass der Laser (2) in einem Betrieb der Vorrichtung (1) elektromagnetische Pumpstrahlung (3) erzeugt, zumindest ein nichtlineares optisches Medium (5, 17), wobei das zumindest eine nichtlineare optische Medium (5, 17) derart eingerichtet und angeordnet ist, dass aus einem Teil der Pumpstrahlung (3) mittels einer ersten parametrischen Fluoreszenz eine erste Signalstrahlung (6) und eine erste Idlerstrahlung (7) erzeugbar ist, so dass
die erste Signalstrahlung (6) eine erste Signalfrequenzbandbreite und eine erste Signalmittenfrequenz aufweist,
die erste Idlerstrahlung (7) eine erste Idlerfrequenzbandbreite und eine erste Idlermittenfrequenz aufweist und
die erste Signalmittenfrequenz von der ersten Idlermittenfrequenz verschieden ist,
wobei das zumindest eine nichtlineare optische Medium (5, 17) derart eingerichtet und angeordnet ist, dass aus einem Teil der Pumpstrahlung (3) mittels einer zweiten parametrischen Fluoreszenz eine zweite Signalstrahlung (6) und eine zweite Idlerstrahlung (7) erzeugbar ist, wobei die erste Idlerstrahlung (7) bei der Erzeugung der zweiten Idlerstrahlung (7) mit dem zumindest einen nichtlinearen optischen Medium (5, 17) wechselwirkt und der zweiten Idlerstrahlung (7) und der zweiten Signalstrahlung (6) ihre Phase aufprägt, so dass
die zweite Signalstrahlung (6) eine zweite Signalfrequenzbandbreite, die gleich der ersten Signalfrequenzbandbreite ist, und eine zweite Signalmittenfrequenz, die gleich der ersten Signalmittenfrequenz ist, aufweist,
die zweite Idlerstrahlung (7) eine zweite Idlerfrequenzbandbreite, die gleich der ersten Idlerfrequenzbandbreite ist und eine zweite Idlermittenfrequenz, die gleich der ersten Idlermittenfrequenz ist, aufweist, und
die erste Idlerstrahlung (6) und die zweite Idlerstrahlung (7) kohärent zueinander sind,
wobei die erste Signalstrahlung (6) auf einem Signalpfad (10) und die erste Idlerstrahlung (7) auf einem Idlerpfad (11) führbar sind,
wobei eine optische Signalweglänge die Strecke ist, die die erste Signalstrahlung auf dem Signalpfad zurücklegt,
wobei eine optische Idlerweglänge die Strecke ist, die die erste Idlerstrahlung (7) auf dem Idlerpfad (11) zurücklegt,
eine Weglängenänderungseinrichtung (18), wobei mit der Weglängenänderungseinrichtung (18) entweder die optische Idlerweglänge oder die optische Signalweglänge veränderbar ist, so dass eine Weglängendifferenz zwischen der optischen Signalweglänge und der optischen Idlerweglänge veränderbar ist,
eine Detektionseinrichtung (14), wobei mit der Detektionseinrichtung (14) ein Weglängeninterferenzmuster einer Intensität ausschließlich der räumlich überlagerten ersten und zweiten Signalstrahlung (6) in Abhängigkeit von der Weglängendifferenz erfassbar ist, und
eine Auswerteeinrichtung (15), wobei die Auswerteeinrichtung (15) derart eingerichtet ist, dass in einem Betrieb der Vorrichtung (1) ein Frequenzspektrum der ersten Idlerstrahlung (7) durch Transformation des von der Weglängendifferenz abhängigen Weglängeninterferenzmusters in das Frequenzspektrum erzeugt wird, wobei die Probe das zumindest eine nichtlineare optische Medium (5, 17) der zweiten parametrischen Fluoreszenz ist oder wobei die Probe (9) in dem Idlerpfad (11) angeordnet ist.

7. Vorrichtung (1) nach Anspruch 6, **dadurch gekennzeichnet, dass** die Vorrichtung (1) einen ersten Strahlteiler (8) aufweist, wobei mit dem ersten Strahlteiler (8) die erste Signalstrahlung (6) und die erste Idlerstrahlung (7) räumlich voneinander trennbar sind.

8. Vorrichtung (1) nach Anspruch 7, **dadurch gekennzeichnet, dass** der erste Strahlteiler (8) ein dichroitischer Spiegel ist, wobei der dichroitische Spiegel derart eingerichtet ist, dass der dichroitische Spiegel in einem Betrieb der Vorrichtung (1) entweder die erste Idlerstrahlung (7) transmittiert und die erste Signalstrahlung (6) reflektiert oder umgekehrt.

9. Vorrichtung (1) nach einem der Ansprüche 6 bis 8, **dadurch gekennzeichnet, dass** die Weglängenänderungseinrichtung (18) einen Spiegel und eine Verschiebeeinrichtung für den Spiegel aufweist, wobei die Weglängenänderungseinrichtung (18) derart eingerichtet und angeordnet ist, dass in einem Betrieb der Vorrichtung 81) die erste Idlerstrahlung (7) oder die erste Signalstrahlung (6) an dem Spiegel reflektiert wird und die Verschiebeeinrichtung die Position des Spiegels derart verändert, dass entweder die optische Idlerweglänge oder die optische Signalweglänge verändert wird.

10. Vorrichtung (1) nach Anspruch 9, **dadurch gekennzeichnet, dass** die Vorrichtung (1) einen zweiten Strahlteiler (16), insbesondere einen dichroitischen Spiegel, aufweist, wobei der zweite Strahlteiler (16) derart eingerichtet ist, dass er in einem Betrieb der Vorrichtung (1) die Pumpstrahlung (3) zu dem zumindest einen nichtlinearen optischen Medium (5, 17) leitet und die an dem Spiegel reflektierte Signalstrahlung (6) zu dem Detektor (14) leitet.

11. Vorrichtung (1) nach einem der Ansprüche 6 bis 10, **dadurch gekennzeichnet, dass** die erste und zweite Idlerstrahlung (7) eine Wellenlänge im Infrarotbereich, bevorzugt im mittelinfraroten Bereich hat und die erste und zweite Signalstrahlung (6) eine Wellenlänge im sichtbaren oder nahinfraroten Bereich hat.

12. Vorrichtung (1) nach einem der Ansprüche 6 bis 11, **dadurch gekennzeichnet, dass** das mindestens eine nichtlineare optische Medium (5, 17) genau ein nichtlineares optisches Medium ist, so dass die zweite Signalstrahlung (6) und die zweite Idlerstrahlung (7) in dem gleichen nichtlinearen optischen Medium (5, 17) erzeugt werden wie die erste Signalstrahlung (6) und die erste Idlerstrahlung (7) oder dass das mindestens eine nichtlineare optische Medium (5, 17) ein erstes nichtlineares optisches Medium (5) und ein zweites nichtlineares optisches Medium (17) umfasst, wobei die erste Signalstrahlung (6) und die erste Idlerstrahlung (7) in dem ersten nichtlinearen optischen Medium (5) und die zweite Signalstrahlung (6) und die zweite Idlerstrahlung (7) in dem zweiten nichtlinearen optischen Medium (17) erzeugt werden.

13. Vorrichtung (1) nach einem der Ansprüche 6 bis 12, **dadurch gekennzeichnet, dass** die Weglängenänderungseinrichtung (18) derart eingerichtet ist, dass der Idlerpfad (11) oder der Signalpfad (10) um ein Vielfaches der Wellenlänge der ersten Idlermittenfrequenz, bevorzugt um ein 100-faches, besonders bevorzugt um ein 1000-faches der Wellenlänge der ersten Idlermittenfrequenz, veränderbar ist.

14. Vorrichtung (1) nach einem der Ansprüche 6 bis 13, **dadurch gekennzeichnet, dass** mit dem zumindest einen nichtlinearen optischen Medium (5, 17) die erste Signalstrahlung 86) und die erste Idlerstrahlung (7) kollinear abstrahlbar sind.

## Claims

1. Method for non-linear optical spectroscopy (1) on a sample (9) comprising the steps:
a) generating electromagnetic pump radiation (3),
b) generating a first signal radiation (6) and a first idler radiation (7) from a portion of the pump radiation (3) by means of a first parametric fluorescence in a non-linear optical medium (5, 17), so that
the first signal radiation (6) has a first signal frequency bandwidth and a first signal centre frequency,
the first idler radiation (7) has a first idler frequency bandwidth and a first idler centre frequency and
the first signal centre frequency is different from the first idler centre frequency,
c) generating a second signal radiation (6) and a second idler radiation (7) from a portion of the pump radiation (3) by means of a second parametric fluorescence in a non-linear optical medium (5, 17), wherein the first idler radiation (7) interacts with the non-linear optical medium (5, 17) during generation of the second idler radiation (7) and imposes its phase on the second idler radiation (7) and the second signal radiation (6), so that
the second signal radiation (6) has a second signal frequency bandwidth which is the same as the first signal frequency bandwidth and a second signal centre frequency which is the same as the first signal centre frequency,
the second idler radiation (7) has a second idler frequency bandwidth which is the same as the first idler frequency bandwidth and a second idler centre frequency which is the same as the first idler centre frequency and
the first idler radiation (7) and the second idler radiation (7) are coherent with one another,
d) spatially superposing the first signal radiation (6) and the second signal radiation (6), wherein the first signal radiation (6) travels an optical signal path length between Step b) and c) and the first idler radiation travels an optical idler path length between Step b) and c),
e) changing a path length difference between the optical signal path length and the optical idler path length,
f) capturing a path length interference pattern of an intensity of only the spatially superposed first and second signal radiation (6) after the spatial superposition of the first idler radiation (7) and the second idler radiation (7) in the non-linear optical medium (5, 17) of the second parametric fluorescence as a function of the path length difference,
g) generating a frequency spectrum of the first idler radiation (7) by transforming the path length interference pattern dependent on the path length difference into the frequency spectrum,
wherein the sample is the non-linear optical medium (5, 17) of the second parametric fluorescence or wherein the sample (9) is illuminated by the first idler radiation (7) between Steps b) and c).

2. Method according to Claim 1, **characterised in that**, between Steps b) and c), the method further comprises the step of spatially separating the signal radiation (6) from the idler radiation (7).

3. Method according to any one of the preceding claims, **characterised in that** the first and second idler radiation (7) have a wavelength in the infrared range, in particular in the mid-infrared range, and the first and second signal radiation have a wavelength in the visible or near-infrared range.

4. Method according to any one of the preceding claims, **characterised in that** the path length difference is changed by a multiple of a wavelength of the first idler centre frequency, preferably a 100 times, particularly preferably a 1000 times the wavelength of the first idler centre frequency.

5. Method according to any one of the preceding claims, **characterised in that** the first signal radiation (6) and the first idler radiation (7) are generated collinearly in Step b).

6. Apparatus (1) for non-linear optical spectroscopy on a sample (9), comprising a laser (2),
wherein the laser (2) is configured such that the laser (2) generates electromagnetic pump radiation (3) when the apparatus (1) is in operation; at least one non-linear optical medium (5, 17), wherein the at least one non-linear optical medium (5, 17) is configured and disposed such that a first signal radiation (6) and a first idler radiation (7) can be generated from a portion of the pump radiation (3) by means of a first parametric fluorescence, so that
the first signal radiation (6) has a first signal frequency bandwidth and a first signal centre frequency,
the first idler radiation (7) has a first idler frequency bandwidth and a first idler centre frequency and
the first signal centre frequency is different from the first idler centre frequency, wherein the at least one non-linear optical medium (5, 17) is configured and disposed such that a second signal radiation (6) and a second idler radiation (7) can be generated from a portion of the pump radiation (3) by means of a second parametric fluorescence, wherein the first idler radiation (7) interacts with the at least one non-linear optical medium (5, 17) during generation of the second idler radiation (7) and imposes its phase on the second idler radiation (7) and the second signal radiation (6), so that
the second signal radiation (6) has a second signal frequency bandwidth which is the same as the first signal frequency bandwidth and a second signal centre frequency which is the same as the first signal centre frequency,
the second idler radiation (7) has a second idler frequency bandwidth which is the same as the first idler frequency bandwidth and a second idler centre frequency which is the same as the first idler centre frequency and
the first idler radiation (6) and the second idler radiation (7) are coherent with one another,
wherein the first signal radiation (6) can be guided on a signal path (10) and the first idler radiation (7) can be guided on an idler path (11),
wherein an optical signal path length is the distance the first signal radiation travels on the signal path,
wherein an optical idler path length is the distance the first idler radiation (7) travels on the idler path (11),
a path length changing device (18), wherein the path length changing device (18) is capable of changing either the optical idler path length or the optical signal path length, so that a path length difference between the optical signal path length and the optical idler path length can be changed,
a detection device (14), wherein the detection device (14) is capable of capturing a path length interference pattern of an intensity of only the spatially superposed first and second signal radiation (6) as a function of the path length difference, and
an evaluation device (15), wherein the evaluation device (15) is configured such that, when the apparatus (1) is in operation, a frequency spectrum of the first idler radiation (7) is generated by transformation of the path length interference pattern dependent on the path length difference into the frequency spectrum, wherein the sample is the at least one non-linear optical medium (5, 17) of the second parametric fluorescence or wherein the sample (9) is disposed in the idler path (11).

7. Apparatus (1) according to Claim 6, **characterised in that** the apparatus (1) comprises a first beam splitter (8), wherein the first signal radiation (6) and the first idler radiation (7) can be spatially separated from one another using the first beam splitter (8).

8. Apparatus (1) according to Claim 7, **characterised in that** the first beam splitter (8) is a dichroic mirror, wherein the dichroic mirror is configured such that the dichroic mirror either transmits the first idler radiation (7) and reflects the first signal radiation (6) or vice versa when the apparatus (1) is in operation.

9. Apparatus (1) according to any one of Claims 6 to 8, **characterised in that** the path length changing device (18) comprises a mirror and a displacement device for the mirror, wherein the path length changing device (18) is configured and disposed such that, when the apparatus 81) is in operation, the first idler radiation (7) or the first signal radiation (6) is reflected on the mirror and the displacement device changes the position of the mirror such that either the optical idler path length or the optical signal path length is changed.

10. Apparatus (1) according to Claim 9, **characterised in that** the apparatus (1) comprises a second beam splitter (16), in particular a dichroic mirror, wherein the second beam splitter (16) is configured such that, when the apparatus (1) is in operation, it directs the pump radiation (3) to the at least one non-linear optical medium (5, 17) and directs the signal radiation (6) reflected on the mirror to the detector (14).

11. Apparatus (1) according to any one of Claims 6 to 10, **characterised in that** the first and second idler radiation (7) has a wavelength in the infrared range, preferably in the mid-infrared range, and the first and second signal radiation (6) has a wavelength in the visible or near-infrared range.

12. Apparatus (1) according to any one of Claims 6 to 11, **characterised in that** the at least one non-linear optical medium (5, 17) is exactly one non-linear optical medium, so that the second signal radiation (6) and the second idler radiation (7) are generated in the same non-linear optical medium (5, 17) as the first signal radiation (6) and the first idler radiation (7) or that the at least one non-linear optical medium (5, 17) comprises a first non-linear optical medium (5) and a second non-linear optical medium (17), wherein the first signal radiation (6) and the first idler radiation (7) are generated in the first non-linear optical medium (5) and the second signal radiation (6) and the second idler radiation (7) are generated in the second non-linear optical medium (17).

13. Apparatus (1) according to any one of Claims 6 to 12, **characterised in that** the path length changing device (18) is configured such that the idler path (11) or the signal path (10) can be changed by a multiple of the wavelength of the first idler centre frequency, preferably a 100 times, particularly preferably a 1000 times the wavelength of the first idler centre frequency.

14. Apparatus (1) according to any one of Claims 6 to 13, **characterised in that** the first signal radiation 86) and the first idler radiation (7) can be emitted collinearly with the at least one non-linear optical medium (5, 17).

## Revendications

1. Procédé de spectroscopie optique non linéaire (1) sur un échantillon (9) avec les étapes
a) générer un rayonnement de pompage électromagnétique (3),
b) générer un premier rayonnement de signal (6) et un premier rayonnement idle (7) à partir d'une partie du rayonnement de pompage (3) à l'aide d'une première fluorescence paramétrique dans un milieu optique non-linéaire (5, 17) de façon que
le premier rayonnement de signal (6) comprenne une première largeur de bande de fréquences de signal et une première fréquence centrale de signal, le premier rayonnement idle (7) comprenne une première largeur de bande de fréquences idle et une première fréquence centrale idle et
la première fréquence centrale de signal soit différente de la première fréquence centrale idle,
c) générer un deuxième rayonnement de signal (6) et un deuxième rayonnement idle (7) à partir d'une partie du rayonnement de pompage (3) à l'aide d'une deuxième fluorescence paramétrique dans un milieu optique non-linéaire (5, 17), le premier rayonnement idle (7) interagissant, lors de la génération du deuxième rayonnement idle, avec le milieu optique non-linéaire (5, 17) et octroyant sa phase au deuxième rayonnement idle (7) et au deuxième rayonnement de signal (6), de façon que
le deuxième rayonnement de signal (6) comprenne une deuxième largeur de bande de fréquences de signal qui est égale à la première largeur de bande de fréquences de signal et une deuxième fréquence centrale de signal qui est égale à la première fréquence centrale de signal,
le deuxième rayonnement idle (7) comprenne une deuxième largeur de bande de fréquences idle qui est égale à première largeur de bande de fréquences de signal et une deuxième fréquence centrale idle qui est égale à la première fréquence centrale idle et
le premier rayonnement idle (7) et le deuxième rayonnement idle (7) soient cohérents l'un par rapport à l'autre,
d) superposer spatialement le premier rayonnement de signal (6) et le deuxième rayonnement de signal (6), le premier rayonnement de signal (6) parcourant une longueur de trajet optique de signal entre l'étape b) et l'étape c) et le premier rayonnement idle (7) parcourant une longueur de trajet optique idle entre l'étape b) et l'étape c),
e) modifier une différence de longueur de trajet entre la longueur de trajet optique de signal et la longueur de trajet optique idle,
f) saisir une différence de motif d'interférence de longueur de trajet d'une intensité exclusivement des premier et deuxième rayonnements de signal (6) après la superposition spatiale du premier rayonnement idle (7) et du deuxième rayonnement idle (7) dans le milieu optique non-linéaire (5, 17) de la deuxième fluorescence paramétrique en fonction de la différence de longueur de trajet,
g) générer un spectre de fréquences du premier rayonnement idle (7) par transformation du motif d'interférence de longueur de trajet fonction de la différence de longueur de trajet, dans le spectre de fréquences,
l'échantillon étant le milieu optique non-linéaire (5, 17) de la deuxième fluorescence paramétrique ou l'échantillon (9) étant illuminé entre les étapes b) et c) par le premier rayonnement idle (7).

2. Procédé selon la revendication 1, **caractérisé en ce que** le procédé comprend, entre les étapes b) et c), en outre l'étape d'une séparation spatiale du rayonnement de signal (6) du rayonnement idle (7).

3. Procédé selon l'une des revendications précédentes, **caractérisé en ce que** le premier et le deuxième rayonnement idle (7) ont une longueur d'onde dans la plage de l'infrarouge, notamment dans la plage d'infrarouge centrale, et que le premier et le deuxième rayonnement de signal ont une longueur d'onde dans la plage du visible ou de l'infrarouge proche.

4. Procédé selon l'une des revendications précédentes, **caractérisé en ce que** la différence de longueur de trajet est modifiée d'un multiple d'une longueur d'onde de la première fréquence centrale idle, de préférence de 100 fois, particulièrement préféré de 1000 fois, de la longueur d'onde de la première fréquence centrale idle.

5. Procédé selon l'une des revendications précédentes, **caractérisé en ce que** le premier rayonnement de signal (6) et le premier rayonnement idle (7) sont générés à l'étape b) de façon colinéaire.

6. Dispositif (1) pour la spectroscopie optique non linéaire sur un échantillon (9), comprenant
un laser (2), le laser (2) étant agencé de façon que, lors d'un fonctionnement du dispositif (1), le laser (2) génère du rayonnement de pompage électromagnétique (3), au moins un milieu optique non-linéaire (5, 17), ledit au moins un milieu optique non-linéaire (5, 17) étant agencé et disposé de façon que, à partir d'une partie du rayonnement de pompage (3), à l'aide d'une première fluorescence paramétrique, un premier rayonnement de signal (6) et un premier rayonnement idle (7) puissent être engendrés,
si bien que
le premier rayonnement de signal (6) comprenne une première largeur de bande de fréquences de signal et une première fréquence centrale de signal, le premier rayonnement idle (7) comprenne une première largeur de bande de fréquences idle et une première fréquence centrale idle et
la première fréquence centrale de signal soit différente de la première fréquence centrale idle,
ledit au moins un milieu optique non-linéaire (5, 17) étant agencé et disposé de façon que, à partir d'une partie du rayonnement de pompage (3), à l'aide d'une deuxième fluorescence paramétrique, un deuxième rayonnement de signal (6) et un deuxième rayonnement idle (7) puissent être engendrés, ledit premier rayonnement idle (7) interagissant, lors de la génération du deuxième rayonnement idle (7), avec ledit au moins un milieu optique non-linéaire (5, 17) et octroyant sa phase au deuxième rayonnement idle (7) et au deuxième rayonnement de signal (6), de façon que le deuxième rayonnement de signal (6) comprenne une deuxième largeur de bande de fréquences de signal qui est égale à la première largeur de bande de fréquences de signal et une deuxième fréquence centrale de signal qui est égale à la première fréquence centrale de signal,
le deuxième rayonnement idle (7) comprenne une deuxième largeur de bande de fréquences idle qui est égale à première largeur de bande de fréquences de signal et une deuxième fréquence centrale idle qui est égale à la première fréquence centrale idle et
le premier rayonnement idle (7) et le deuxième rayonnement idle (7) soient cohérents l'un par rapport à l'autre,
le premier rayonnement de signal (6) pouvant être mis sur un chemin de signal (10) et le premier rayonnement idle (7) sur un chemin idle (11),
une longueur de chemin optique de signal étant le trajet que le premier rayonnement de signal parcourt sur le chemin de signal,
une longueur de chemin optique idle étant le trajet que le premier rayonnement idle (7) parcourt sur le chemin idle (11),
un dispositif de changement de longueur de chemin (18), le positif de changement de longueur de chemin (18) permettant de changer soit la longueur de chemin optique idle soit la longueur de chemin optique de signal, de façon qu'une différence de longueur de chemin puisse être changée entre la longueur de chemin optique de signal et la longueur de chemin optique idle,
un dispositif de détection (14), le dispositif de détection (14) pouvant saisir un motif d'interférence de longueur de chemin d'une intensité exclusivement des premier et deuxième rayonnements de signal (6) superposés dans l'espace en fonction de la différence de longueur de chemin, et
un dispositif d'évaluation (15), le dispositif d'évaluation (15) étant agencé de façon que, lors d'un fonctionnement du dispositif (1), un spectre de fréquences du premier rayonnement idle (7) est engendré par transformation du motif d'interférence de longueur de chemin qui dépend de la différence de longueur de chemin, dans le spectre de fréquences,
l'échantillon étant ledit au moins un milieu optique non-linéaire (5, 17) de la deuxième fluorescence paramétrique et l'échantillon (9) étant disposé sur le chemin idle (11).

7. Dispositif (1) selon la revendication 6, **caractérisé en ce que** le dispositif (1) comprend un premier diviseur de faisceau (8), le diviseur de faisceau (8) permettant de séparer dans l'espace le premier rayonnement de signal (6) et le premier rayonnement idle (7) l'un de l'autre.

8. Dispositif (1) selon la revendication 7, **caractérisé en ce que** le premier diviseur de faisceau (8) est un miroir dichroïque, le miroir dichroïque étant agencé de façon que, lors d'un fonctionnement du dispositif (1), le miroir dichroïque ou transmette le premier rayonnement idle (7) et réfléchisse le premier rayonnement de signal (6), ou fasse l'inverse.

9. Dispositif (1) selon l'une des revendications 6 à 8, **caractérisé en ce que** le positif de changement de longueur de chemin (18) comprend un miroir et un dispositif de translation pour le miroir, le positif de changement de longueur de chemin (18) étant agencé et disposé de façon que, lors d'un fonctionnement du dispositif (1), le premier rayonnement idle (7) ou le premier rayonnement de signal (6) soit réfléchi sur le miroir et que le dispositif de déplacement change la position du miroir de façon que ou la longueur de chemin optique idle ou la longueur de chemin optique de signal soit changée.

10. Dispositif (1) selon la revendication 9, **caractérisé en ce que** le dispositif (1) comprend un deuxième diviseur de faisceau (16), notamment un miroir dichroïque, le deuxième diviseur de faisceau (16) étant agencé de façon que, lors d'un fonctionnement du dispositif (1), il guide le rayonnement de pompage (3) vers ledit au moins un milieu optique non-linéaire (5, 17) et le rayonnement de signal (6) réfléchi sur le miroir, vers le détecteur (14).

11. Dispositif (1) selon l'une des revendications 6 à 10, **caractérisé en ce que** le premier et le deuxième rayonnement idle (7) ont une longueur d'onde dans la plage de l'infrarouge, de préférence dans la plage centrale de l'infrarouge, et que le premier et le deuxième rayonnement de signal (6) ont une longueur d'onde dans la plage du visible ou de l'infrarouge proche.

12. Dispositif (1) selon l'une des revendications 6 à 11, **caractérisé en ce que** ledit au moins un milieu optique non-linéaire (5, 17) est précisément un milieu optique non-linéaire, si bien que le deuxième rayonnement de signal (6) et le deuxième rayonnement idle (7) sont engendré dans le même milieu optique non-linéaire (5, 17) que le premier rayonnement de signal (6) et le premier rayonnement idle (7) ou que ledit au moins un milieu optique non-linéaire (5, 17) comprend un premier milieu optique non-linéaire (5) et un deuxième milieu optique non-linéaire (17), le premier rayonnement de signal (6) et le premier rayonnement idle (7) étant engendrés dans le premier milieu optique non-linéaire (5) et le deuxième rayonnement de signal (6) et le deuxième rayonnement idle (7) dans le deuxième milieu optique non-linéaire (17).

13. Dispositif (1) selon l'une des revendications 6 à 12, **caractérisé en ce que** le dispositif de changement de longueur de chemin (18) est agencé de façon que le chemin idle (11) ou le chemin de signal (10) puisse être changé d'un multiple de la longueur d'onde de la première fréquence idle centrale, de préférence de 100 fois, particulièrement préféré de 1000 fois, la longueur d'onde de la première fréquence idle centrale.

14. Dispositif (1) selon l'une des revendications 6 à 13, **caractérisé en ce que**, avec ledit au moins un milieu optique non-linéaire (5, 17), le premier rayonnement de signal (6) et le premier rayonnement idle (7) peuvent être émis de façon colinéaire.
